# EUROPÄISCHE PATENTANMELDUNG

(11) **EP 0 832 915 A2**
(43) Veröffentlichungstag der Anmeldung: **01.04.1998**
(21) Anmeldenummer: 97110353.6
(22) Anmeldetag: 25.06.1997
(51) Int. Cl.: C08J 5/12

(54) **Verfahren zur Herstellung eines Gummi-Metall-Teils**

(30) Priorität: 30.09.1996 DE 19640180
(71) Anmelder: Firma Carl Freudenberg, 69469 Weinheim (DE)
(72) Erfinder: Lau, Helmut, Dr., 79418 Schliengen (DE); Schwerdt, Hans-Werner, 69514 Laudenbach (DE)

(57) **Zusammenfassung**

Verfahren zur Herstellung eines Gummi-Metall-Teils, bei dem ein Kautschukteil mit dem Metallteil vulkanisiert wird, wobei das Metallteil in einem ersten Verfahrensschritt mit zumindest einer metallhaltigen Korrosionsschutzschicht beschichtet wird, wobei in einem zweiten Verfahrensschritt auf die Korrosionsschutzschicht ein Lack aufgebracht wird, wobei in einem dritten Verfahrensschritt auf das Metallteil ein Haftmittel aufgebracht wird und wobei in einem vierten Verfahrensschritt das Kautschukteil auf das Haftmittel aufgebracht und mit dem Metallteil vulkanisiert wird, wobei der Lack und das Haftmittel durch Druck und Wärmezufuhr miteinander vernetzt werden. Der Lack und das Haftmittel werden erst im vierten Verfahrensschritt vollständig ausreagiert und mit dem Metallteil und dem Kautschukteil vernetzt sowie unlösbar verbunden.

## Beschreibung

### Technisches Gebiet

Die Erfindung betrifft ein Verfahren zur Herstellung eines Gummi-Metall-Teils, bei dem ein Kautschukteil mit einem Metallteil vulkanisiert wird, wobei das Metallteil in einem ersten Verfahrensschritt mit zumindest einer metallhaltigen Korrosionsschutzschicht beschichtet wird, wobei in einem zweiten Verfahrensschritt auf die Korrosionsschutzschicht ein Lack aufgebracht wird, wobei in einem dritten Verfahrensschritt auf das Metallteil ein Haftmittel aufgebracht wird und wobei in einem vierten Verfahrensschritt das Kautschukteil auf das Haftmittel aufgebracht und mit dem Metallteil vulkanisiert wird, wobei der Lack und das Haftmittel durch Druck und Wärmezufuhr miteinander vernetzt werden.

### Stand der Technik

Ein solches Verfahren ist aus der EP 0 054 861 bekannt. Bei dem vorbekannten Verfahren wird in einem ersten Verfahrensschritt ein Lacküberzug auf das Metallteil aufgebracht und eingebrannt, wobei der Lacküberzug durch kataphoreische Tauchlackierung aufgebracht wird. Anschließend wird in einem zweiten Verfahrensschritt der eingebrannte Lacküberzug mit einem Haftsystem auf der Basis von halogenierten Polymeren beschichtet, wobei das Haftsystem aus halogenierten Polymeren in Abmischung mit Füllstoffen, Harzen und Vernetzern direkt auf den eingebrannten, vollständig ausreagierten Lacküberzug aufgebracht wird. In einem vierten Verfahrensschritt wird eine Kautschukschicht aufgespritzt, die zu dem Gummiteil vulkanisiert wird. Durch den eingebrannten Lacküberzug, der mittels einer kataphoresischen Tauchlackierung aufgebracht worden ist, ergibt sich eine gleichmäßige, dünne Schicht, die direkt als Primer dienen kann, so daß es eines zusätzlichen Primers nicht mehr bedarf. Das Einbrennen der Lackschicht erfolgt bei etwa 250°C, und die erhaltene Lackschicht hat eine Dicke von etwa 20 µm. Dieses Verfahren führt zu keinem zufriedenstellenden Korrosionsschutz, da die Lackschicht eine nur sehr geringe Schichtstärke aufweist. Außerdem ist die Verbindung zwischen der Lackschicht und dem Haftvermittler nicht ausreichend, da durch das Einbrennen des Lacks bei sehr hohen Temperaturen keine reaktiven Molekülgruppen mehr in der Lackschicht vorhanden sind, d.h. der Lack nach dem Aufbringen bereits vollständig ausreagiert wird.

Aus der DE 32 35 978 C2 ist ein weiteres Verfahren zur Herstellung von Halbzeugen in Form großflächiger, plattenförmiger Verbundwerkstoffe bekannt, bei dem ein Stahlband, das bereits phosphatiert und passiviert bzw. ein Aluminiumband, welches chromatiert und passiviert ist, in einer ersten Beschichtungsstation in einem ersten Verfahrensschritt einseitig mit einem Primer auf Epoxidharz-Basis beschichtet wird. In einem zweiten Verfahrensschritt durchläuft das Stahlband einen Trocknungskanal, wobei der Primer bei 220°C getrocknet wird. In einem dritten Verfahrensschritt wird eine Klebelösung auf die geprimerte Seite des Stahlbands aufgetragen und in einem weiteren Trocknungskanal bei einer Temperatur von 180°C getrocknet. In einem fünften Verfahrensschritt wird eine Kunststoffolie auf das beschichtete Stahlblech kaschiert, wobei in einem sechsten Verfahrensschritt nach ausreichender Abkühlung der kaschierten Verbundbahn eine Trennfolie aufgebracht wird. Die Haftfestigkeit dieses Verbundes ist noch nicht ausreichend, da die Kleberschicht noch nicht vollständig ausgehärtet ist. Die vollständige Aushärtung des Klebers erfolgt durch eine Verpressung des Verbundteils mit einem Preßdruck von 30 bar bei 120 bis 130°C, wobei diese Bedingungen etwa eine halbe Stunde gehalten werden.

Außerdem wird eine Kunstsoffschicht verwendet, die frei ist von Vulkanisationshilfsmitteln, insbesondere Vernetzungsmitteln und Vulkanisationsbeschleunigern. Die Vulkanisationsbeschleuniger sind beim vorbekannten Verfahren in Kleber enthalten. Die im Kleber enthaltenen Vulkanisationsbeschleuniger sind jedoch nur wirksam, wenn dünne, elastomere Kunststoffolien aufgeklebt werden. Bei einer Vulkanisation von kompakten Elastomerkörpern auf beschichteten Metallteilen ist das vorbekannte Verfahren wenig zufriedenstellend, da die reaktiven Bestandteile im Kleber nicht durch vergleichsweise dickere Elastomerschichten hindurchdiffundieren können.

### Darstellung der Erfindung

Der Erfindung liegt die Aufgabe zugrunde, ein Verfahren der vorbekannten Art derart weiterzuentwickeln, daß neben einem verbesserten Korrosionsschutz des Metallteils eine wesentlich bessere Haftung zwischen der Korrosionsschutzschicht und dem Gummiteil erzielt wird.

Diese Aufgabe wird erfindungsgemäß durch die Merkmale von Anspruch 1 gelöst. Auf vorteilhafte Weiterbildungen des Verfahrens nehmen die Unteransprüche Bezug.

Zur Lösung der Aufgabe ist es vorgesehen, daß der Lack im zweiten Verfahrensschritt unter Zufuhr von Wärme nur teilweise ausreagiert wird und daß der Lack und das Haftmittel erst im vierten Verfahrensschritt vollständig ausreagiert und mit dem Metallteil und dem Kautschuk vernetzt sowie unlösbar verbunden werden. Hierbei ist von Vorteil, daß der Lack bei einer vergleichsweise niedrigen Temperatur zunächst nur teilweise vernetzt/ausreagiert wird, so daß noch eine ausreichend große Anzahl reaktiver Molekülgruppen vorhanden ist, zur Reaktion mit dem Haftmittel, das im dritten Verfahrensschritt aufgebracht und im vierten Verfahrensschritt zusammen mit dem Lack vollständig vernetzt wird. Der Lack wird im zweiten Verfahrensschritt auf 80°C bis 170°C, vorzugsweise auf 100°C bis 150°C erwärmt und dadurch vorvernetzt.

Durch die Reaktion der Molekülgruppen des Lacks mit dem Haftmittel wird eine besonders haltbare Verbindung zwischen den Korrosionsschutzschichten, dem Gummi- und dem Metallteil hergestellt. Das erfindungsgemäße Verfahren ist vergleichsweise einfach und kostengünstig durchführbar, da erst im letzten Verfahrensschritt der Lack und das Haftmittel miteinander vernetzt werden und die dazu erforderliche Wärmemenge nur vergleichsweise gering ist. Die Temperatur im vierten Verfahrensschritt beträgt ca. 150 bis 180°C.

Bei dem erfindungsgemäßen Verfahren ist von Vorteil, daß ein Kautschukteil während seiner Formgebung durch Vulkanisation mit dem Metallteil durch Kleben unter Druck unlösbar verbunden wird. Einer separaten Herstellung des Gummiteils, umfassend eine separate Formgebung und anschließende Vulkanisation, wobei das Gummiteil im Anschluß an seine Herstellung mit dem Metallteil montiert und verklebt wird, bedarf es daher nicht. Das Verfahren ist dadurch vereinfacht.

Als Haftmittel gelangt bevorzugt ein handelsübliches, reaktives, wärmevernetzbares Haftmittel zur Anwendung.

Im ersten Verfahrensschritt kann als Korrosionsschutzschicht eine Eisenphosphatschicht oder eine Zinkphosphatschicht und/oder eine Zinkschicht aufgetragen werden. Im ersten Verfahrensschritt wird als Korrosionsschutzschicht eine Eisenphosphatschicht bzw. eine Zinkphosphatschicht aufgetragen, wobei man für Teile mit feineren oder maßgenaueren Oberflächen eine Eisenphosphatschicht vorziehen wird. Diese weist eine geringere Schichtdicke auf und ist das wirtschaftlichste und recyclingfreundlichste Verfahren. Bei rauheren Oberflächen bzw. unterschiedlich stark voroxydierten Oberflächen oder einem nicht homogenen Anlieferungszustand zieht man eine Zinkphosphatbeschichtung mit einem in das Verfahren eingeschlossenen Ätz- bzw. Reinigungsvorgang vor, wobei man die Stärke der Zinkphosphatschicht noch in einem größeren Bereich variieren kann, je nach erforderlichem Korrosionsschutz.

Wird ein noch höherer Korrosionsschutz gefordert, dann ist es zweckmäßig, zunächst galvanisch z.B. eine Zinkschicht auf das Metallteil aufzubringen und dann die Metallphosphatschicht zu erzeugen, was zusammen mit der Lackschicht den besten Korrosionsschutz bietet.

Im zweiten Verfahrensschritt kann als Lack ein Pulverlack in Niedertemperaturausführung aufgetragen werden. Der Lack kann beispielsweise aus einem Polyesterharz, Epoxidharz oder einem Polyester-Epoxidharzgemisch bestehen. Hierbei ist von Vorteil, daß die Lackschicht bei einer relativ niedrigen Temperatur bereits teilweise vernetzt werden kann, so daß eine große Anzahl reaktiver Molekülgruppen zur Reaktion mit dem Haftmittel im vierten Verfahrensschritt zur Verfügung steht. Auch zur vollständigen Vernetzung im vierten Verfahrensschritt sind nur vergleichsweise niedrige Temperaturen erforderlich, so daß eine Beschädigung/Zerstörung des Kautschuk-/Gummiteils während des Verfahrens ausgeschlossen ist. Die Temperaturbereiche, in denen ein Niedertemperaturlack ausreagiert werden kann, liegen zwischen 80 und 170°C.

Als Lackschicht können auch übliche lösungsmittelhaltige Lacke beziehungsweise wasserlösliche Lacke verarbeitet werden, bei denen jedoch ein energieinduzierter Abluft- beziehungsweise Trocknungsprozeß notwendig ist. Auch härtbare Acrylatharze oder modifizierte Alkydharze können zur Anwendung gelangen.

Es besteht auch die Möglichkeit, einen KTL-Lack durch kataphoresische Tauchlackierung (KTL) aufzubringen. Dieser bietet durch die kathodische Lackabsohneidung auf dem als Kathode fungierenden Metallteil ein besonders dichtes und homogenes Gefüge bei vergleichsweise geringen Schichtstärken von ca. 25 µm bis 45 µm, gegenüber 60 µm bis 80 µm bei Pulverlack. Unabhängig davon, welcher der oben genannten Lacke im zweiten Verfahrensschritt aufgetragen wird, beträgt die Schichtstärke 25 bis 80 µm. Durch eine derartige, vergleichsweise große Schichtdicke wird den gestiegenen Anforderungen an den Korrosionsschutz der Metallteile Rechnung getragen.

Polyurethanlacke werden bevorzugt durch Sprühlackierung auf das Metallteil aufgetragen. Polyurethanlacke sind elastisch und weitgehend schlagfest.

Durch das zuvor beschriebene Verfahren sind Gummi-Metall-Teile im allgemeinen und Motorlager oder Schwingungsdämpfer im besonderen herstellbar. Die Motorlager können beispielsweise durch hydraulisch dämpfende Buchsen oder Lager gebildet sein; die Schwingungsdämpfer können als Torsionsschwingungsdämpfer ausgebildet sein. Das Metallteil ist bevorzugt durch ein Nabenteil und einen das Nabenteil mit radialem Abstand umschließenden Außenring gebildet, wobei das Gummiteil durch zumindest einen Federkörper gebildet ist, der in dem durch den Abstand gebildeten Spalt zwischen dem Nabenteil und dem Außenring einvulkanisiert ist.

## Patentansprüche

1. Verfahren zur Herstellung eines Gummi-Metall-Teils, bei dem ein Kautschukteil mit dem Metallteil vulkanisiert wird, wobei das Metallteil in einem ersten Verfahrensschritt mit zumindest einer metallhaltigen Korrosionsschutzschicht beschichtet wird, wobei in einem zweiten Verfahrensschritt auf die Korrosionsschutzschicht ein Lack aufgebracht wird, wobei in einem dritten Verfahrensschritt auf das Metallteil ein Haftmittel aufgebracht wird und wobei in einem vierten Verfahrensschritt das Kautschukteil auf das Haftmittel aufgebracht und mit dem Metallteil vulkanisiert wird, wobei der Lack und das Haftmittel durch Druck und Wärmezufuhr miteinander vernetzt werden, **dadurch gekennzeichnet**, daß der Lack im zweiten Verfahrensschritt unter Zufuhr von Wärme nur teilweise ausreagiert wird und daß der Lack und das Haftmittel erst im vierten Verfahrensschritt vollständig ausreagiert und mit dem Metallteil und dem Kautschuk vernetzt sowie unlösbar verbunden werden.

2. Verfahren nach Anspruch 1, dadurch gekennzeichnet, daß der Lack im zweiten Verfahrensschritt auf 80 bis 170° C erwärmt und dadurch vorvernetzt wird.

3. Verfahren nach einem der Ansprüche 1 bis 2, dadurch gekennzeichnet, daß im ersten Verfahrensschritt als Korrosionsschutzschicht eine Eisenphosphatschicht aufgetragen wird.

4. Verfahren nach einem der Ansprüche 1 bis 2, dadurch gekennzeichnet, daß im ersten Verfahrensschritt als Korrosionsschutzschicht eine Zinkphosphatschicht aufgetragen wird.

5. Verfahren nach einem der Ansprüche 1 bis 4, dadurch gekennzeichnet, daß im ersten Verfahrensschritt als Korrosionsschutzschicht eine Zinkschicht aufgetragen wird.

6. Verfahren nach einem der Ansprüche 3 bis 5, dadurch gekennzeichnet, daß zwei Korrosionsschutzschichten aufgetragen werden.

7. Verfahren nach einem der Ansprüche 1 bis 6, dadurch gekennzeichnet, daß im zweiten Verfahrensschritt als Lack ein Pulverlack in Niedertemperaturausführung aufgetragen wird.

8. Verfahren nach Anspruch 7, dadurch gekennzeichnet, daß als Lack ein Pulverlack, bestehend aus Polyesterharz und/oder Epoxidharz aufgetragen wird.

9. Verfahren nach einem der Ansprüche 1 bis 6, dadurch gekennzeichnet, daß im zweiten Verfahrensschritt als Lack ein KTL-Lack aufgetragen wird.

10. Verfahren nach einem der Ansprüche 7 bis 9, dadurch gekennzeichnet, daß der Lack in einer Schichtstärke von 25 bis 80 µm aufgetragen wird.

11. Verwendung des Verfahrens gemäß einem der Ansprüche 1 bis 10 zur Herstellung eines Motorlagers oder Schwingungsdämpfers.
